# EUROPÄISCHE PATENTANMELDUNG

(11) **EP 2 933 414 A1**
(43) Veröffentlichungstag der Anmeldung: **21.10.2015**
(21) Anmeldenummer: 15162790.8
(22) Anmeldetag: 08.04.2015
(51) Int. Cl.: E05F 15/63, E05F 3/10

(54) **TÜRANTRIEB**

(30) Priorität: 15.04.2014 DE 102014207217; 17.02.2015 DE 102015202832
(71) Anmelder: GEZE GmbH, 71229 Leonberg (DE)
(72) Erfinder: Vögele, Roland, 71364 Winnenden (DE)

(57) **Zusammenfassung**

Ein Türantrieb (10), insbesondere Drehtürantrieb, umfasst ein Gehäuse (12), eine mit einem Türflügel oder einem Blendrahmen koppelbare Abtriebsachse (18), einen Motor (20) zum Antreiben der Abtriebsachse (18) und eine Federeinheit (22), die während einer jeweiligen Öffnungsbewegung des Türflügels gespannt wird und sich während einer jeweiligen Schließbewegung des Türflügels entspannt, wobei die Abtriebsachse (18) über eine Zahnstange (28) durch den Motor (20) antreibbar ist und die Federeinheit (22) einerseits an der Zahnstange (28) und andererseits über einen Anschlag (30) am Gehäuse (12) abgestützt ist, der zur Einstellung der Federkraft der Federeinheit (22) relativ zum Gehäuse (12) verstellbar ist.

## Beschreibung

Die vorliegende Erfindung betrifft einen Türantrieb, insbesondere Drehtürantrieb, mit einem Gehäuse, einer mit einem Türflügel oder einem Blendrahmen koppelbaren Abtriebsachse, einem Motor zum Antreiben der Abtriebsachse und einer Federeinheit, die während einer jeweiligen Öffnungsbewegung des Türflügels gespannt wird und sich während einer jeweiligen Schließbewegung des Türflügels entspannt.

Derartige Türantriebe dienen dazu, den Flügel einer motorisch geöffneten Tür mit Federkraft zu schließen. Dies ist insbesondere bei Rauch- und Feuerschutztüren von Bedeutung, die im Alarmfall, insbesondere nach Ansprechen eines Rauchmelders oder bei Stromausfall, schnell und zuverlässig geschlossen werden müssen. Mit dem Öffnen des Türflügels wird gleichzeitig die Federeinheit gespannt. Mit Hilfe der Federeinheit kann der Türantrieb den Türflügel somit auch bei einem Stromausfall schließen, was bei Brandschutztüren zwingend ist.

Bei den bisher üblichen Drehtürantrieben der eingangs genannten Art lässt sich die Federkraft der Federeinheit meistens schlecht und nur mit relativ großem Aufwand verstellen. Dabei ist in der Regel zur entsprechenden Verstellung der Federeinheit eine Vielzahl von kostspieligen Bauteilen erforderlich. Obwohl ein Verstellen der Federkraft der Federeinheit normalerweise nur einmal bei der Montage des Türantriebs vorgenommen werden muss, bringt der dazu erforderliche Aufwand relativ hohe Herstellungskosten mit sich.

Der Erfindung liegt die Aufgabe zugrunde, einen Türantrieb, insbesondere Drehtürantrieb, der eingangs genannten Art anzugeben, bei dem die zuvor genannten Nachteile beseitigt sind. Dabei soll bei möglichst geringem Aufwand insbesondere die Federkraft der Federeinheit auf einfachere Weise variabel einstellbar sein.

Die Aufgabe wird erfindungsgemäß durch einen Türantrieb mit den Merkmalen des Anspruchs 1 gelöst. Bevorzugte Ausführungsformen des erfindungsgemäßen Türantriebs ergeben sich aus den Unteransprüchen, der vorliegenden Beschreibung sowie der Zeichnung.

Der erfindungsgemäße Türantrieb, insbesondere Drehtürantrieb, umfasst ein Gehäuse, eine mit einem Türflügel oder einem Blendrahmen koppelbare Abtriebsachse, einen Motor zum Antreiben der Abtriebsachse und eine Federeinheit, die während einer jeweiligen Öffnungsbewegung des Türflügels gespannt wird und sich während einer jeweiligen Schließbewegung des Türflügels entspannt. Dabei ist die Abtriebsachse über eine Zahnstange durch den Motor antreibbar und die Federeinheit einerseits an der Zahnstange und andererseits über einen Anschlag am Gehäuse abgestützt, der zur Einstellung der Federkraft der Federeinheit relativ zum Gehäuse verstellbar ist.

Aufgrund dieser Ausbildung ist die Federkraft der Federeinheit mit minimalem Aufwand auf einfache Weise variabel einstellbar. Der dazu vorgesehene relativ zum Gehäuse verstellbare Anschlag ist mit relativ geringem Aufwand realisierbar. Zudem kann die Federkraft der Federeinheit über einen solchen verstellbaren Anschlag auf einfache Weise eingestellt werden.

Eine bevorzugte praktische Ausführungsform des erfindungsgemäßen Türantriebs zeichnet sich dadurch aus, dass die Federeinheit eine auf die Zahnstange aufgeschobene Druckfeder umfasst und der verstellbare Anschlag durch eine auf die Zahnstange aufgeschobene, relativ zum Gehäuse axial verstellbare Hülse gebildet ist.

Indem sowohl die Federeinheit als auch die axial verstellbare Hülse jeweils auf die Zahnstange aufgeschoben sind, ergibt sich ein besonders kompakter Aufbau des Türantriebs.

Bevorzugt ist die Hülse mit einem Außengewinde versehen und über dieses Außengewinde in das Gehäuse eingeschraubt.

Durch Verdrehen der Hülse kann diese somit relativ zum Gehäuse axial verstellt werden, um die jeweils gewünschte Federkraft einzustellen.

Von Vorteil ist hierbei, wenn die Hülse mit einer Schrägverzahnung versehen und über eine mit der Schrägverzahnung kämmende Schnecke axial verstellbar ist.

Indem die Hülse durch die Schnecke über die Schrägverzahnung gedreht wird, wird sie über deren Außengewinde je nach Drehrichtung in der einen oder anderen Richtung relativ zum Gehäuse bewegt, womit die Federkraft der Federeinheit entsprechend verstellt wird.

Von Vorteil ist hierbei, wenn die Hülse mit ihrem Außendurchmesser der Schrägverzahnung in der Bohrung der beiden Getriebegehäuseschalen geführt wird, womit einerseits die Führung der Hülse über das Außengewinde und andererseits über den Außendurchmesser der Schrägverzahnung gewährleistet ist. Vorteilhafterweise wird die Hülse an zwei Stellen gelagert und kann somit nicht verkanten.

Von Vorteil ist insbesondere auch, wenn das Gehäuse mit wenigstens einer Öffnung versehen ist, durch die hindurch die jeweilige Federvorspannung der Federeinheit ablesbar ist.

Dabei kann das Gehäuse auf einander gegenüberliegenden Seiten mit jeweils wenigstens einer solchen Öffnung versehen sein. Von Vorteil ist insbesondere, wenn das Gehäuse zum Ablesen der Federvorspannung der Federeinheit mit wenigstens einem Langloch versehen ist, durch welches die Position der Hülse zur Ermittlung der Federverstellung besonders gut einsehbar ist.

Bevorzugt ist die auf die Zahnstange aufgeschobene Federeinheit zwischen der auf die Zahnstange aufgeschobenen Hülse und einer an der Zahnstange abgestützten Anlagescheibe angeordnet. Dabei kann die Anlagescheibe beispielsweise an wenigstens einem an der Zahnstange vorgesehenen zahnartigen Vorsprung abgestützt sein.

Axial zwischen der Anlagescheibe und der Federeinheit können insbesondere ein auf die Zahnstange aufgeschobenes Axiallager und vorzugsweise eine auf die Zahnstange aufgeschobene Zwischenhülse angeordnet sein.

Indem die genannten Bauteile auf die Zahnstange aufgeschoben sind, ergibt sich ein insgesamt kompakter Aufbau des Türantriebs. Die Zahnstange mit den darauf aufgeschobenen Bauteilen kann in einem Gehäuse sitzen, das auf einer Seite mit einem Deckel und auf der anderen Seite durch die Hülse verschlossen wird. Der Deckel und die Hülse können jeweils über ein Gewinde in das Gehäuse eingeschraubt sein. Auf das Gehäuse kann eine Lagerplatte beispielsweise aufgeschraubt sein, die zusammen mit dem Gehäuse die Lagerstelle für die Abtriebsachse bildet.

Die Zahnstange ist bevorzugt über ein Getriebe vom Motor beaufschlagbar, das für die gewünschte Übersetzung sorgt.

Dabei kann die Zahnstange insbesondere einen mit einem Ritzel des Getriebes kämmenden Verzahnungsabschnitt sowie einen mit einer Verzahnung der Abtriebsachse kämmenden Verzahnungsabschnitt umfassen.

Bevorzugt umfasst die Zahnstange einen mit einer Unrund-Verzahnung der Abtriebsachse kämmenden wellenförmigen Verzahnungsabschnitt.

Mit einer solchen Gestaltung der zusammenwirkenden Verzahnungen der Abtriebsachse und der Zahnstange kann das sich ergebende Schließ- und Öffnungsmoment in der gewünschten Weise beeinflusst werden. So kann ein jeweils gewünschter Verlauf des Schließ- und Öffnungsmoments insbesondere durch eine entsprechende Wahl der Wellenform des Verzahnungsabschnitts der Zahnstange und eine entsprechende Wahl der Form der Unrund-Verzahnung der Abtriebsachse vorgegeben werden.

Dagegen kann die Zahnstange einen mit dem Ritzel des Getriebes kämmenden linearen Verzahnungsabschnitt umfassen.

Gemäß einer zweckmäßigen praktischen Ausführungsform des erfindungsgemäßen Türantriebs erstreckt sich die Zahnstange mit ihrer mit dem Ritzel des Getriebes kämmenden Verzahnungsabschnitt aus der Hülse heraus.

Die zur Verstellung der Hülse vorgesehene Schnecke kann insbesondere um 90° gegenüber der Zahnstange versetzt sein. Bevorzugt ist die Schnecke in einander gegenüberliegenden Getriebegehäuseschalen gelagert. Dabei können diese Getriebegehäuseschalen mit Durchgangsbohrungen zu der Schnecke versehen sein. Die Getriebegehäuseschalen können auch das Gehäuse mit der Feder und die auf diese aufgeschobenen Bauteile halten. Die Hülse kann einerseits formschlüssig über das Außengewinde im Gehäuse gelagert und andererseits über den Außendurchmesser der Schrägverzahnung in den beiden Getriebegehäuseschalen abgestützt sein. Die Schnecke kann in Gehäusebohrungen der Getriebegehäuseschalen sitzen und dadurch radial und axial positioniert sein.

Bevorzugt ist die Schnecke an ihren beiden Enden jeweils mit einer Aufnahme für den Eingriff eines Werkzeugs versehen. Dabei kann die Schnecke an ihren beiden Enden beispielsweise jeweils mit einem Innensechskant zur Aufnahme eines Inbusschlüssels versehen sein. Wird die Schnecke über das betreffende Werkzeug bzw. den Inbusschlüssel gedreht, so wird die Hülse über die Schrägverzahnung relativ zum Gehäuse gedreht, womit diese über deren Außengewinde relativ zum Gehäuse axial verstellt wird. Damit kann entsprechend auch die Vorspannung der Federeinheit in der gewünschten Weise verstellt werden.

Die Federkraft der Federeinheit des erfindungsgemäßen Türantriebs ist somit mit relativ geringem Aufwand auf einfache Weise von zwei Seiten variabel einstellbar. Zur Federkraftverstellung sind lediglich zwei Bauteile, nämlich die Hülse und die Schnecke, erforderlich, womit der zur Federkraftverstellung erforderliche Aufwand minimiert und die Herstellungskosten entsprechend gesenkt werden. Zudem ist über die Gehäuseöffnungen die Position der zur Federverstellung vorgesehenen Hülse einsehbar, wodurch die jeweilige Federvorspannung ablesbar ist.

Die Erfindung wird im Folgenden anhand eines Ausführungsbeispiels unter Bezugnahme auf die Zeichnung näher erläutert; in dieser zeigen:
- Fig. 1: eine schematische Darstellung einer beispielhaften Ausführungsform eines beispielsweise als Obentürschließer vorgesehenen erfindungsgemäßen Türantriebs,
- Fig. 2: eine schematische Draufsicht des Türantriebs gemäß Fig. 1,
- Fig. 3: eine schematische Schnittdarstellung des Türantriebs gemäß Fig. 1, in der die über die Hülse eingestellte Federvorspannung relativ gering ist, und
- Fig. 4: eine mit der Darstellung gemäß Fig. 3 vergleichbare schematische Schnittdarstellung des Türantriebs gemäß Fig. 1, in der die über die Hülse eingestellte Federvorspannung relativ hoch ist.

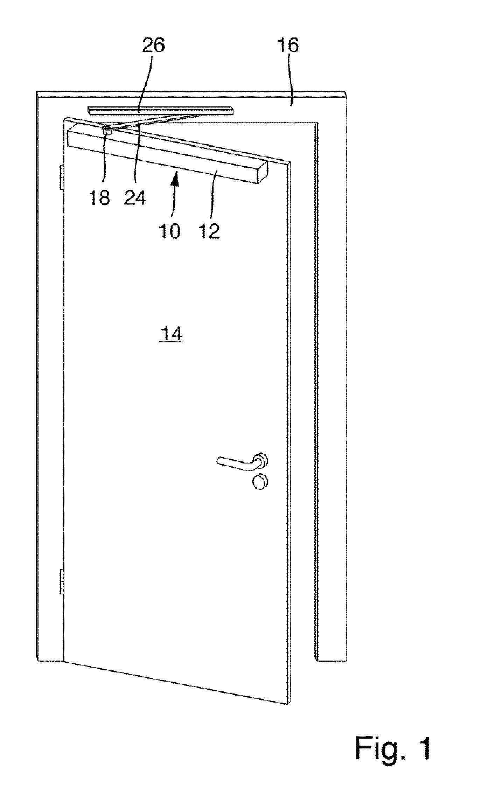

Die Fig. 1 bis 4 zeigen in schematischer Darstellung eine beispielhafte Ausführungsform eines erfindungsgemäßen Türantriebs 10, der in der Darstellung gemäß Fig. 1 beispielsweise als Obentürschließer für eine Drehtür vorgesehen ist.

Der Türantrieb 10 umfasst ein Gehäuse 12, eine drehbar am Gehäuse 12 gelagerte und mit einem Türflügel 14 oder einem Blendrahmen 16 koppelbaren Abtriebsachse 18, einen Motor 20, insbesondere Elektromotor, zum Antreiben der Abtriebsachse 18 und eine Federeinheit 22, die während einer jeweiligen Öffnungsbewegung des Türflügels 14 gespannt wird und sich während einer jeweiligen Schließbewegung des Türflügels 14 entspannt, um ein Schließmoment zu liefern.

Dabei ist der Türantrieb 10 in der Darstellung gemäß Fig. 1 beispielsweise als Obentürschließer für eine Drehtür vorgesehen, wobei im vorliegenden Fall das Gehäuse 12 mit der Abtriebsachse 18 am Türflügel 14 angebracht und die Abtriebsachse 18 mit einem Hebel 24 verbunden ist, der mit einem Gleitstein oder dergleichen versehen ist, der in einer Gleitschiene 26 geführt ist, die am Blendrahmen 16 fixiert ist.

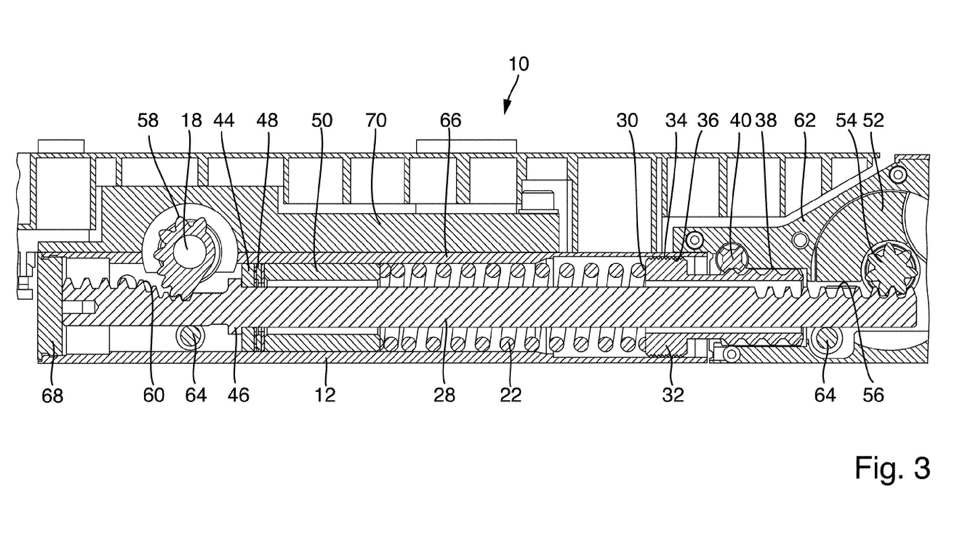

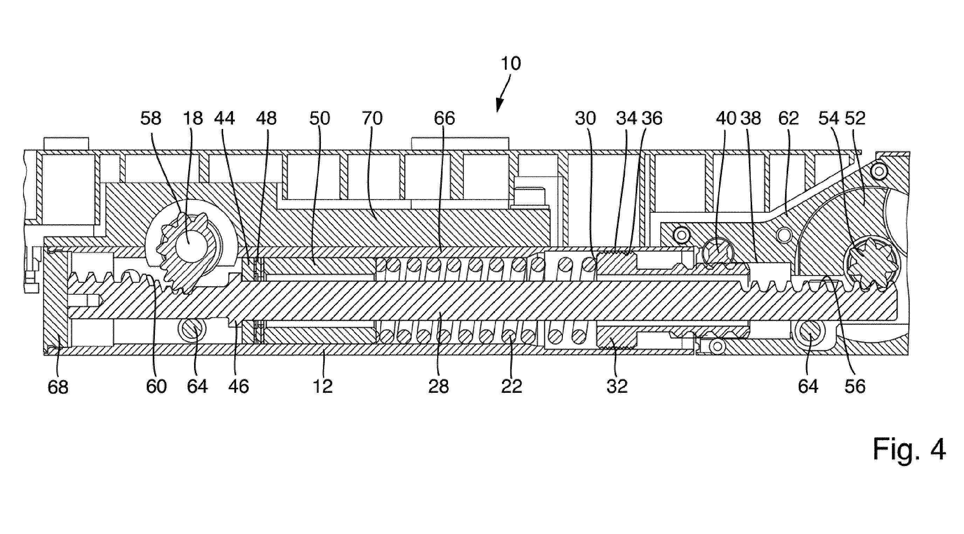

Wie insbesondere anhand der Fig. 3 und 4 zu erkennen ist, ist die Abtriebsachse 18 über eine Zahnstange 28 durch den Motor 20 antreibbar und die Federeinheit 22 einerseits an der Zahnstange 28 und andererseits über einen Anschlag 30 am Gehäuse 12 abgestützt, der zur Einstellung der Federkraft der Federeinheit 22 relativ zum Gehäuse 12 verstellbar ist.

Die Federeinheit 22 umfasst eine auf die Zahnstange 28 aufgeschobene Druckfeder, die an einem Ende an dem verstellbaren Anschlag 30 abgestützt ist. Dabei ist der verstellbare Anschlag 30 durch die Stirnfläche einer auf die Zahnstange 28 aufgeschobenen, relativ zum Gehäuse 12 axial verstellbaren Hülse 32 gebildet.

Wie insbesondere wieder anhand der Fig. 3 und 4 zu erkennen ist, ist die Hülse 32 mit einem Außengewinde 34 versehen und über dieses Außengewinde 34 in das Gehäuse 12 eingeschraubt, das dazu mit einem Innengewinde 36 versehen ist.

Zudem ist die Hülse 32 mit einer Schrägverzahnung 38 versehen und über eine mit der Schrägverzahnung 38 kämmende Schnecke 40 axial verstellbar.

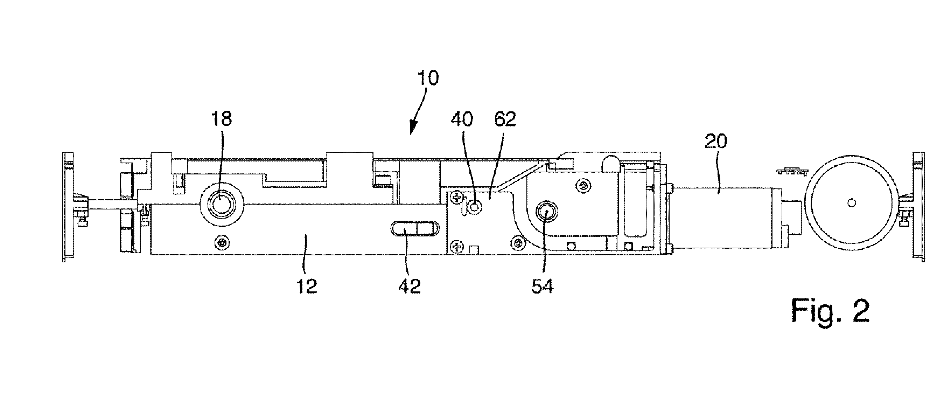

Das Gehäuse 12 kann mit wenigstens einer Öffnung 42 (vgl. Fig. 2) versehen sein, durch die hindurch die jeweilige Federvorspannung der Federeinheit 22 ablesbar ist. Im vorliegenden Fall ist auf einander gegenüberliegenden Seiten des Gehäuses 12 jeweils eine solche jeweils als Langloch ausgeführte Öffnung 42 vorgesehen.

Die auf die Zahnstange 28 aufgeschobene Federeinheit 22 ist zwischen der auf die Zahnstange 28 aufgeschobenen Hülse 32 und einer an der Zahnstange 28 abgestützten Anlagescheibe 44 angeordnet, die ebenfalls wieder auf die Zahnstange 28 aufgeschoben ist und sich beispielsweise an wenigstens einem radialen Vorsprung 46 der Zahnstange 28 abstützt. Axial zwischen der Anlagescheibe 44 und der Federeinheit 22 sind ein auf die Zahnstange 28 aufgeschobenes Axiallager 48 und eine auf die Zahnstange 28 aufgeschobene Zwischenhülse 50 angeordnet.

Die Zahnstange 28 ist über ein Getriebe 52 vom Motor 20 beaufschlagbar. Die Zahnstange 28 umfasst einen mit einem Ritzel 54 des Getriebes 52 kämmenden Verzahnungsabschnitt 56 sowie einen mit einer Verzahnung 58 der Abtriebsachse 18 kämmenden Verzahnungsabschnitt 60. Dabei umfasst die Zahnstange 28 im vorliegenden Fall einen mit einer Unrund-Verzahnung 58 der Abtriebsachse 18 kämmenden wellenförmigen Verzahnungsabschnitt 60. Dagegen kann der mit dem Ritzel 54 des Getriebes 52 kämmende Verzahnungsabschnitt 56 der Zahnstange 28 insbesondere als linearer Verzahnungsabschnitt ausgeführt sein.

Wie insbesondere wieder anhand der Fig. 3 und 4 zu erkennen ist, erstreckt sich die Zahnstange 28 mit ihrer mit dem Ritzel 54 des Getriebes 52 kämmenden Verzahnungsabschnitt 56 aus der Hülse 32 heraus.

Die Schnecke 40 ist im vorliegenden Fall um 90° gegenüber der Zahnstange 28 versetzt und in einander gegenüberliegenden Getriebegehäuseschalen 62 gelagert.

Die Schnecke 40 kann an ihren beiden Enden jeweils mit einer Aufnahme für den Eingriff eines Werkzeugs versehen sein. Dabei kann die Schnecke 40 an ihren beiden Enden beispielsweise jeweils mit einem Innensechskant zur Aufnahme eines Inbusschlüssels versehen sein. Wird die Schnecke 40 über das betreffende Werkzeug gedreht, so dreht sich über die Schrägverzahnung 38 auch die Hülse 32, womit diese über deren Außengewinde 34 je nach Drehrichtung des Werkzeugs in der einen oder anderen Richtung relativ zum Gehäuse 12 axial verstellt wird. Damit ändert sich auch entsprechend die Vorspannung der Federeinheit 22.

Die Zahnstange 28 ist im Bereich deren mit dem Ritzel 54 des Getriebes 52 und mit der Verzahnung 58 der Abtriebswelle 18 in Eingriff stehenden Verzahnungsabschnitten 56, 60 jeweils über eine auf der vom jeweiligen Verzahnungsabschnitt 56, 60 abgewandten Seite der Zahnstange 28 angeordnete insbesondere wälzgelagerte Rolle 64 oder dergleichen abgestützt.

Die Zahnstange 28 kann mit den auf sie aufgeschobenen Bauteilen in einem Gehäuseabschnitt 66 sitzen, der auf einer Seite durch einen Deckel 68 und auf der anderen Seite durch die Hülse 32 verschlossen wird. Der Deckel 68 und die Hülse 32 können über Gewinde in den Gehäuseabschnitt 66 eingeschraubt sein. Auf den Gehäuseabschnitt 66 kann eine Lagerplatte 70 geschraubt sein, die zusammen mit dem Gehäuseabschnitt 66 die Lagerstelle für die Abtriebsachse 18 bildet.

Die Schnecke 40 sitzt in den beiden Getriebegehäuseschalen 62 mit Durchgangsbohrungen zu der Schnecke 40. Die Getriebegehäuseschalen 62 halten auch den Gehäuseabschnitt 66 mit der Federeinheit 22. Die Hülse 32 ist einerseits formschlüssig über das Außengewinde 34 im Gehäuseabschnitt 66 gelagert und andererseits über den Außendurchmesser der Schrägverzahnung 38 in den beiden Getriebegehäuseschalen 62 abgestützt. Die Schnecke 40 sitzt in Gehäusebohrungen der Getriebegehäuseschalen 62 und wird damit radial und axial positioniert.

In der Darstellung gemäß Fig. 3 ist die über die Hülse 32 eingestellte Federvorspannung relativ gering. Dagegen ist die über die Hülse 32 eingestellte Federvorspannung in der Darstellung gemäß Fig. 4 relativ hoch.

Mit dem erfindungsgemäßen Türantrieb 10 ist die Federkraft der Federeinheit 22 auf einfache Weise von zwei Seiten variabel einstellbar. Der dazu erforderliche bauliche Aufwand ist auf ein Minimum reduziert. So sind zur Verstellung lediglich zwei Bauteile, nämlich die Hülse 32 und die Schnecke 40, erforderlich. Zudem kann die Federvorspannung über die beispielsweise als Langlöcher vorgesehenen Öffnungen 42 im Gehäuse 12 abgelesen werden.

### Bezugszeichenliste

- 10: Türantrieb
- 12: Gehäuse
- 14: Türflügel
- 16: Blendrahmen
- 18: Abtriebsachse
- 20: Motor
- 22: Federeinheit
- 24: Hebel
- 26: Gleitschiene
- 28: Zahnstange
- 30: Anschlag
- 32: Hülse
- 34: Außengewinde
- 36: Innengewinde
- 38: Schrägverzahnung
- 40: Schnecke
- 42: Öffnung
- 44: Anlagescheibe
- 46: Vorsprung
- 48: Axiallager
- 50: Zwischenhülse
- 52: Getriebe
- 54: Ritzel
- 56: Verzahnungsabschnitt
- 58: Unrund-Verzahnung
- 60: wellenförmiger Verzahnungsabschnitt
- 62: Getriebegehäuseschale
- 64: Rolle
- 66: Gehäuseabschnitt
- 68: Deckel
- 70: Lagerplatte

## Patentansprüche

1. Türantrieb (10), insbesondere Drehtürantrieb, mit einem Gehäuse (12), einer mit einem Türflügel (14) oder einem Blendrahmen (16) koppelbaren Abtriebsachse (18), einem Motor (20) zum Antreiben der Abtriebsachse (18) und einer Federeinheit (22), die während einer jeweiligen Öffnungsbewegung des Türflügels (14) gespannt wird und sich während einer jeweiligen Schließbewegung des Türflügels (14) entspannt, wobei die Abtriebsachse (18) über eine Zahnstange (28) durch den Motor (20) antreibbar ist und die Federeinheit (22) einerseits an der Zahnstange (28) und andererseits über einen Anschlag (30) am Gehäuse (12) abgestützt ist, der zur Einstellung der Federkraft der Federeinheit (22) relativ zum Gehäuse (12) verstellbar ist.

2. Türantrieb nach Anspruch 1,
**dadurch gekennzeichnet, dass** die Federeinheit (22) eine auf die Zahnstange (28) aufgeschobene Druckfeder umfasst und der verstellbare Anschlag (30) durch eine auf die Zahnstange (28) aufgeschobene, relativ zum Gehäuse (12) axial verstellbare Hülse (32) gebildet ist.

3. Türantrieb nach Anspruch 2,
**dadurch gekennzeichnet, dass** die Hülse (32) mit einem Außengewinde (34) versehen und über dieses Außengewinde (34) in das Gehäuse (12) eingeschraubt ist.

4. Türantrieb nach Anspruch 3,
**dadurch gekennzeichnet, dass** die Hülse (32) mit einer Schrägverzahnung (38) versehen und über eine mit der Schrägverzahnung (38) kämmende Schnecke (40) axial verstellbar ist.

5. Türantrieb nach zumindest einem der vorstehenden Ansprüche,
**dadurch gekennzeichnet, dass** die Hülse (32) mit ihrem Außendurchmesser der Schrägverzahnung (38) in der Bohrung der beiden Getriebegehäuseschalen (62) geführt wird, womit einerseits die Führung der Hülse (32) über das Außengewinde (34) und andererseits über den Außendurchmesser der Schrägverzahnung gewährleistet ist.

6. Türantrieb nach zumindest einem der vorstehenden Ansprüche,
**dadurch gekennzeichnet, dass** das Gehäuse (12) mit wenigstens einer Öffnung (42) versehen ist, durch die hindurch die jeweilige Federvorspannung der Federeinheit (22) ablesbar ist.

7. Türantrieb nach zumindest einem der vorstehenden Ansprüche,
**dadurch gekennzeichnet, dass** die auf die Zahnstange (28) aufgeschobene Federeinheit (22) zwischen der auf die Zahnstange (28) aufgeschobenen Hülse (32) und einer an der Zahnstange (28) abgestützten Anlagescheibe (44) angeordnet ist.

8. Türantrieb nach Anspruch 7,
**dadurch gekennzeichnet, dass** axial zwischen der Anlagescheibe (44) und der Federeinheit (22) ein auf die Zahnstange (28) aufgeschobenes Axiallager (48) und vorzugsweise eine auf die Zahnstange (28) aufgeschobene Zwischenhülse (50) angeordnet sind.

9. Türantrieb nach zumindest einem der vorstehenden Ansprüche,
**dadurch gekennzeichnet, dass** die Zahnstange (28) über ein Getriebe (52) vom Motor (20) beaufschlagbar.

10. Türantrieb nach Anspruch 9,
**dadurch gekennzeichnet, dass** die Zahnstange (28) einen mit einem Ritzel (54) des Getriebes (52) kämmenden Verzahnungsabschnitt (56) sowie einen mit einer Verzahnung (58) der Abtriebsachse (18) kämmenden Verzahnungsabschnitt (60) umfasst.

11. Türantrieb nach Anspruch 10,
**dadurch gekennzeichnet, dass** die Zahnstange (28) einen mit einer Unrund-Verzahnung (58) der Abtriebsachse (18) kämmenden wellenförmigen Verzahnungsabschnitt (60) umfasst.

12. Türantrieb nach einem der Anspruch 10 oder 11,
**dadurch gekennzeichnet, dass** die Zahnstange (28) einen mit dem Ritzel (54) des Getriebes (52) kämmenden linearen Verzahnungsabschnitt (56) umfasst.

13. Türantrieb nach einem der vorstehenden Ansprüche,
**dadurch gekennzeichnet, dass** sich die Zahnstange (28) mit ihrer mit dem Ritzel (54) des Getriebes (52) kämmenden Verzahnungsabschnitt (56) aus der Hülse (32) heraus erstreckt.

14. Türantrieb nach zumindest einem der vorstehenden Ansprüche,
**dadurch gekennzeichnet, dass** die insbesondere um 90° gegenüber der Zahnstange (28) versetzte Schnecke (40) in einander gegenüberliegenden Getriebegehäuseschalen (62) gelagert ist.

15. Türantrieb nach zumindest einem der vorstehenden Ansprüche,
**dadurch gekennzeichnet, dass** die Schnecke (40) an ihren beiden Enden jeweils mit einer Aufnahme für den Eingriff eines Werkzeugs versehen ist.
